# EUROPEAN PATENT SPECIFICATION

(11) **EP 1 604 889 B1**
(45) Date of publication and mention of the grant of the patent: **27.02.2008**
(21) Application number: 05076362.2
(22) Date of filing: 10.06.2005
(51) Int. Cl.: B62H 3/08, B62H 3/10

(54) **Bicycle stand**
Fahrradständer
Support pour bicyclette

(30) Priority: 11.06.2004 NL 1026406
(43) Date of publication of application: 14.12.2005
(73) Proprietor: Heerkes, Hendrik Jan, 7558 DZ Hengelo (NL)
(72) Inventor: Heerkes, Hendrik Jan, 7558 DZ Hengelo (NL)
(74) Representative: Schumann, Bernard Herman Johan

(56) References cited:
- EP-A- 0 944 517
- FR-A- 2 711 346
- FR-A- 2 825 967
- US-A- 5 735 410
- US-A1- 2003 071 097
- US-B1- 6 640 979

## Description

The invention relates to a cycle stand, comprising:
a frame for anchoring on a floor or in the ground;
a first wheel guide with two elongate vertical side plates, an entry opening and an exit opening, along which first wheel guide can be rolled the front wheel of a cycle for placing in the cycle stand;
a second wheel guide mounted pivotally relative to the frame in a vertical plane and having a base and two elongate vertical side plates, and an entry opening connecting to the exit opening of the first wheel guide, wherein the second wheel guide inclines upward in the rest position and, due to the downward directed force resulting from the presence of said front wheel, pivots downward to an operating position around a pivot axis in the area of the transition between the exit opening of the first wheel guide and the entry opening of the second wheel guide;
the first wheel guide being provided on its free end zone with coupling means for coupling a part of a cycle placed in the stand to these coupling means in the operating position by means of a closable coupling device, for instance a chain lock;
the arrangement being such that, in the rest position of the cycle stand, the front wheel of a cycle for placing in the cycle stand can reach the second wheel guide in rolling manner via the first wheel guide, which second wheel guide pivots downward to the operating position, at least after a continued displacement of said front wheel, whereby the first wheel guide also pivots upward;
the first wheel guide and the second wheel guide being rigidly connected to each other and forming a mutual angle between them the angular point lying in the region of the pivot bearing;
a front wheel support is present for supporting the front wheel of a cycle placed in the cycle stand.

Such a cycle stand is known from e.g. US-A-2003/071 097.

This prior art cycle stand structure comprises a front wheel support which is manually collapsible and extendable.

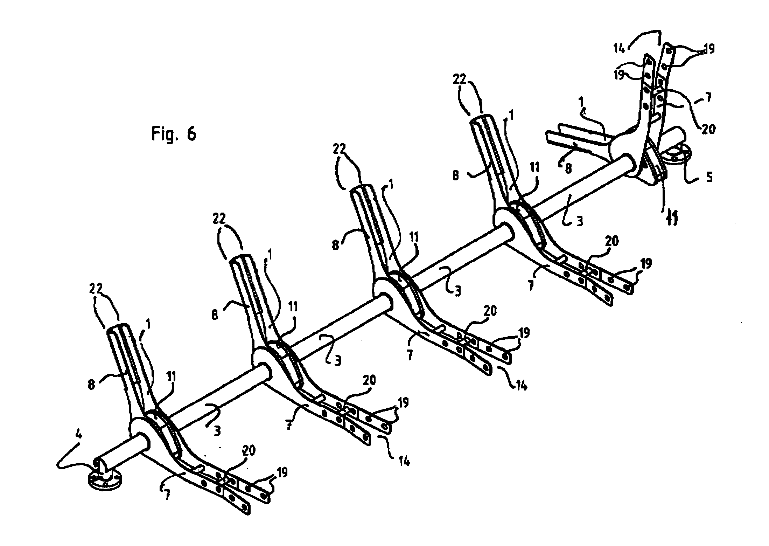

Furthermore, the manually extendable and collapsible support bracket 26 according to e.g. figure 6 of this prior document together with the second bracket 32 supports only the front wheel.

The present invention comprises a cycle stand in accord to the preamble, which is characterized in that the second wheel guide is also the front wheel support; the first wheel guide has a length such that in the operating position its free end zone can impart lateral support to a bar of the frame of a parked cycle; and the mutual angle formed between the first wheel guide and the second wheel guide is set in the range 105°-150°.

Furthermore reference is made to EP-A-0 944 517.

The cycle stand according to this prior art document comprises a first wheel guide which is disposed fixedly relative to the ground and on the end of which a second wheel guide is pivotally arranged. By means of a coupling rod this second wheel guide operates, during its pivoting movement, a pivot arm which is likewise disposed pivotally relative to the first wheel guide and which, when the second wheel guide pivots downward, pivots upward to an operating position in which it is suitable to serve as coupling element for fastening a cycle to the pivot arm by means of a frame element and making use of a specially prescribed bracket lock.

The system of rods according to the described prior art comprises four hinges. The construction of this known cycle stand is therefore relatively complicated. Owing to this construction the known cycle stand can therefore only be produced at relatively high cost. The known cycle stand is further not very vandal-proof. Finally, it is a drawback of the known cycle stand that there is a risk of limbs, in particular fingers, being trapped between the mutually pivoting parts in the situation in which the stand is not in use and is being used by children as play apparatus.

Compared to EP-A-0 944 517 the number of pivot points is reduced from four to one, which makes the construction simpler, cheaper and less susceptible to breakdown and vandalism.

According to the invention, and other than the rails according to EP-A-0 944 517 serving as such, the two wheel guides are not coupled to each other pivotally but are connected fixedly to each other.

A cycle stand is known from US-A-5 553 715 which comprises a pivot arm which is embedded in the ground and can be pivoted upward therefrom, which arm can be fastened to the frame of a cycle by means of coupling means similarly to the pivot arm disclosed in EP-A-0 994 517.

Attention is further drawn to NL-A-82 04402. A cycle is known from this publication which comprises a stationary wheel guide with two side plates, into which the front wheel of a cycle can be placed, as a result of which locking means are activated by the wheel and engage on the cycle by being closed. As in the cycle stand according to EP-A-0 944 517, bringing of the locking means into locking position takes place by riding the front wheel of a cycle into a wheel guide.

The first wheel guide, which is embodied pivotally and for this purpose coupled fixedly to the second wheel guide, comprises two side plates which can pass the relatively narrow frame of the cycle on either side such that the end zone of this wheel guide can carry the coupling means for coupling of this first wheel guide to the frame and/or the front wheel of a cycle. According to the invention the first wheel guide therefore has a dual function, i.e. the function of wheel guide for guiding the front wheel of a cycle in correct manner to the second wheel guide, and the function of pivot arm for fastening the frame and/or the front wheel to the cycle stand by means of the coupling means. Because the side plates extend on both sides of the frame, they also give lateral support to the cycle.

The cycle stand known from US-A-2003/0071097 is intended for arranging on the roof of a car, other than the cycle stand according to the invention which is intended for anchoring on a floor or in the ground. This known cycle stand comprises three arms, i.e. (1) a manually collapsible and extendable entry bracket which serves to hold the front wheel of a parked cycle, (2) a fastening arm which is pivotable separately of the entry bracket and which gives support to the front wheel and can also be adapted to carry a lock or the like, whereby falling-over of a parked cycle is prevented to at least some extent, as well as (3) a lever for operating said fastening arm. An essential difference from the cycle stand according to the invention is that this known cycle stand comprises only one wheel guide, the function of which corresponds up to a certain point with the first wheel guide according to the invention. This older publication makes no mention of a structure with two wheel guides connected inseparably to each other as in the invention.

In order to enable a universal embodiment of the cycle stand and to make it suitable for different types of cycles, in particular for both larger cycles and smaller cycles, the cycle stand according to the invention can have the special feature that said angle between the first wheel guide and the second wheel guide is adjustable.

A very simple and inexpensive embodiment is a variant in which the first wheel guide and the second wheel guide are embodied together as an integral, monolithic unit.

In order to ensure that in the rest state the first wheel guide always has a substantially horizontal position, so that the front wheel of a cycle for parking can be easily placed therein, the cycle stand can advantageously be provided with reset means for urging the first and the second wheel guide to the rest position.

This latter embodiment can be embodied in simple manner such that the first and the second wheel guide are together inherently monostable and the reset means are based on the force of gravity. This means that in both the rest position and in the operating position the mass centre of the total pivotable construction is situated on that side of the pivot axis of the pivot bearing where the first wheel guide is also situated.

In another embodiment, the cycle stand comprises spring means which urge the first and the second wheel guide to the operating position, wherein the spring force produced by these spring means is smaller than the force, for instance gravity, which holds the first and the second wheel guide in the rest position. In such an embodiment it is not only the force of the weight of the front wheel of the cycle, but also the spring force produced by the spring means which ensures that the construction flips over, whereby the operating position can be reached with a smaller force. Depending on the location of the centre of gravity of the combination of the first wheel guide and the second wheel guide, it is even possible for the second wheel guide to lose contact with the front wheel of the relevant cycle during its displacement toward the operating position, and to flip into its operating position. It must be understood that for the described action the spring means are tensioned during the phase in which a cycle is moved out of the stand, so the front wheel of the cycle comes into contact with the first wheel guide due to its rearward displacement and displaces this latter to its rest position. The force associated herewith is used partly to tension the spring means.

In order to hold the cycle practically always ready for use in the rest position, it can advantageously be provided with holding means, for instance clamping means and/or magnet means, for the purpose of holding the first and the second wheel guide in the rest position with a low force such that under the influence of a front wheel of a cycle the second wheel guide pivots downward while co-displacing the first wheel guide.

Such a cycle stand can have the feature that the magnet means comprise a magnet with plastic-bonded neodymium. As per se generally known, the magnet must co-act with a ferromagnetic anchor which co-acts with the magnet in the coupling position.

In a further variant the cycle stand has a stop, which acts when reaching the rest position and/or the operating position, between the first and/or the second wheel guide on the one hand and the fixed world, for instance the frame, on the other. In a simple alternative, the ground can serve as stop.

In order to also enable the front wheel of a cycle to roll easily into the cycle stand according to the invention at an angle which is not wholly correct, the cycle stand can have the special feature that the entry zone of the first wheel guide widens towards the outside.

The cycle stand according to the invention can have the special feature that the side plates of the first wheel guide are mutually coupled in longitudinal direction in their central zone by a transverse connection. This transverse connection enhances the strength and the fixed mutual relation between the side plates of the first wheel guide. The transverse connection can also serve as blocking element for fastening the frame and/or the front wheel of the cycle to the first wheel guide by means of a cable lock or chain lock.

According to yet another aspect of the invention, the cycle stand comprises a casing which is arranged over a certain angle around and at a distance from the pivot bearing in the transition zone between the first wheel guide and the second wheel guide and which extends substantially between the two side plates on the one lateral side and the two side plates on the other lateral side, over which casing the front wheel of a cycle for placing in the cycle stand must travel to reach the second wheel guide from the first wheel guide. Owing to this casing, which can for instance extend over the pivot bearing on the upper side through about 180°, the front wheel of a cycle for parking must be moved in, whereby it obtains an extra potential energy which facilitates the subsequent downward pivoting of the second wheel guide. This improves the operational reliability of the cycle stand according to the invention. The casing furthermore serves to protect the pivot bearing against weather influences, dirt and the like.

The cycle stand can consist of any suitable material. The embodiments which have been found very suitable are those in which at least the first and the second wheel guide consist of stainless steel, aluminium, for instance cast or injection-moulded aluminium, plastic such as PE, POM, ABS, optionally provided with a reinforcement.

A specific embodiment of the cycle stand according to the invention has the special feature that the first wheel guide has a length such that in the operating position its free end zone can impart lateral support to a bar of the frame of a parked cycle. This makes the construction vandal-proof in the sense that vandals exerting a great lateral force on a cycle have no, or at least a limited ability to break, deform and render unusable the front wheel of the parked cycle in this manner.

In the case of a one-sided lateral support, this protection would be effective in the relevant direction of the support, but in the other direction it would be necessary to rely on the additional support in this direction which can for instance be imparted by an arranged cable lock or the like.

An embodiment is recommended in this respect in which the free end zone of the first wheel guide consists only of the two side plates, which can impart lateral support to a bar of the frame of a parked cycle on both respective sides.

In respect of this protection against great lateral pivoting movements of a parked cycle, it is possible to consider covering the inner surface of each relevant side plate with a material which prevents scratching and deforming contact, for instance rubber or a rubber-like material.

The invention will now be elucidated with reference to the accompanying drawings of a random exemplary embodiment, to which the invention is not limited. In the drawings:
Fig. 1A, 1B, 1C, 1D, 1E and 1F show a side view of successive phases, from riding the front wheel of a cycle into the cycle stand to the operating position, in which the cycle can be coupled to the cycle stand according to the invention by means of for instance a chain lock;
Fig. 2 is a perspective view of a part of a cycle stand according to the invention, without reset spring, in which the interior of the cycle stand is clearly shown;
Fig. 3 shows a view corresponding with Fig. 2 of the central part of the cycle stand in a second embodiment, in which the cycle stand is provided with a reset spring;
Fig. 4 shows a cross-sectional view of the cycle stand;
Fig. 5 shows detail V of Fig. 4 on enlarged scale;
Fig. 6 shows a cycle stand unit comprising a number of cycle stands according to the invention; and
Fig. 7A, 7B and 7C show views corresponding with Fig. 2, on smaller scale, of respectively the rest position, an intermediate position and the operating position.

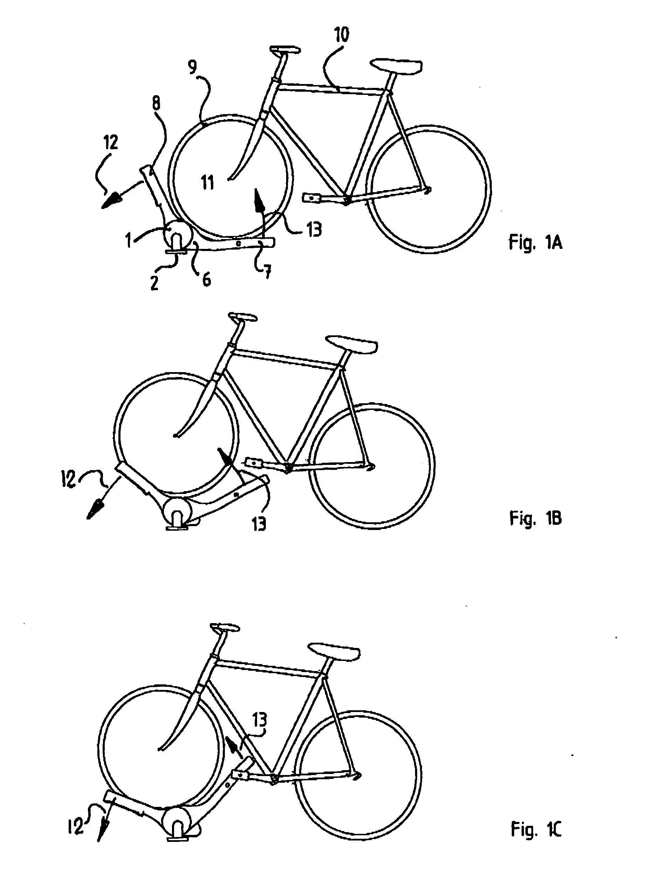

Fig. 1A shows a side view of a cycle stand 1 according to the invention which is in the rest position. The cycle stand comprises a structure 2 anchored in the ground, which will be discussed later with reference to Fig. 6. The structure 2 comprises a rod or tube 3 which is supported at its ends by supports 4, 5 anchored in the ground. Mounted pivotally around tube 3 is a unit 6, comprising a first wheel guide 7 and a second wheel guide 8 fixedly connected thereto.

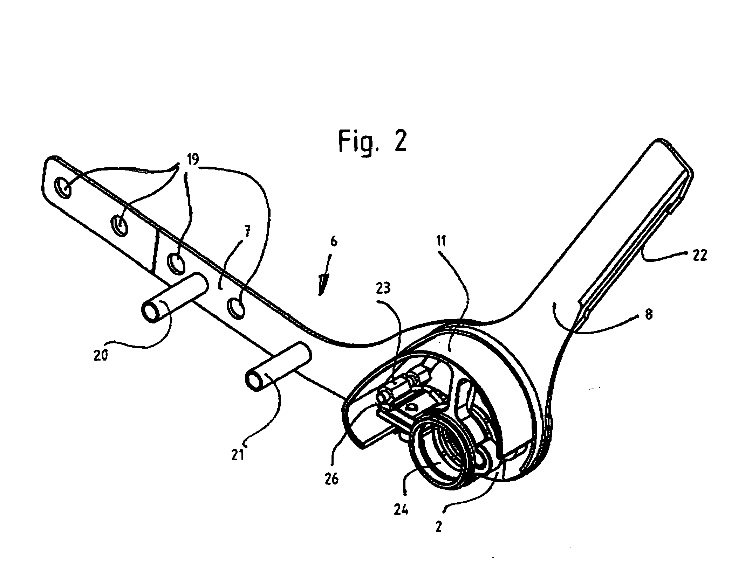

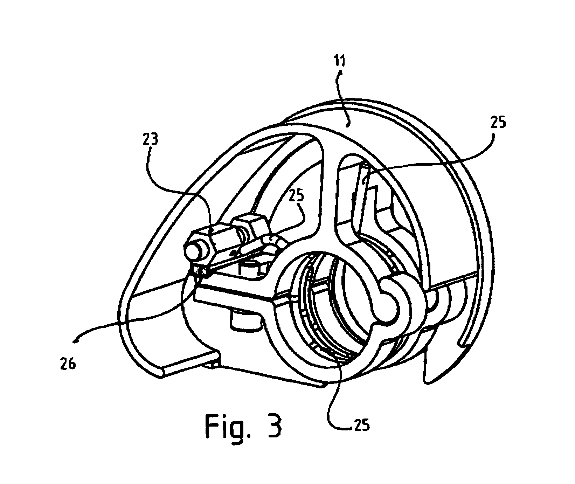

In the rest position shown in Fig. 1A the front wheel 9 of a cycle 10 is moved over the first wheel guide until front wheel 9 has come into contact with a central rise cam 11. This cam is shown particularly clearly in Fig. 2 and 3.

With a continued displacement from the rest position drawn in Fig. 1A the front wheel 9 is displaced over rise cam 11 by a user of cycle 10 such that front wheel 9 comes into contact with the second wheel guide 8, which thereby undergoes the downward directed pivoting movement designated with arrow 12, in combination with an upward directed pivoting movement of first wheel guide 7 as according to an arrow 13. Fig. 1B shows the thus obtained intermediate position.

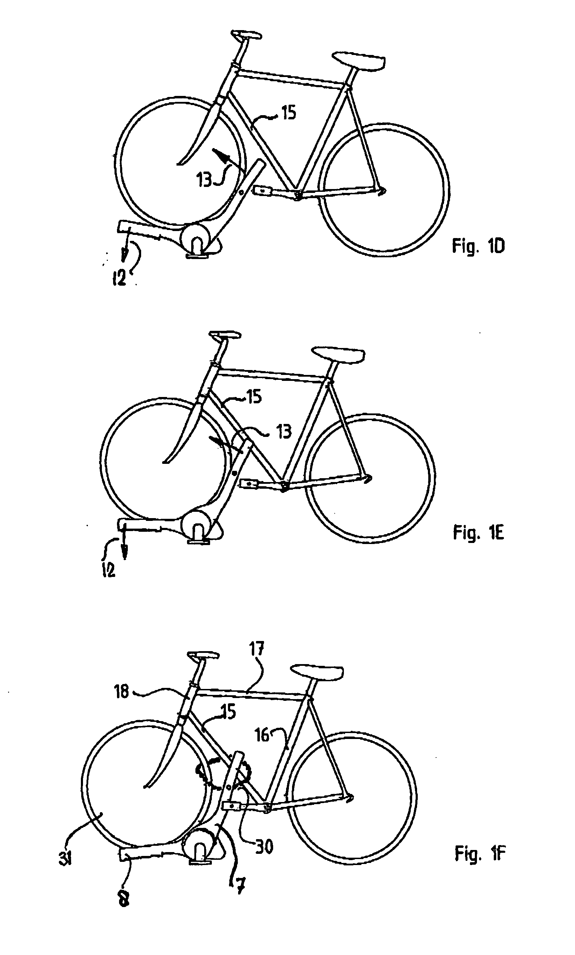

Fig. 1C shows an even further advanced displacement, while Fig. 1D and 1E show that entry opening 14 (see Fig. 6) of first wheel guide 7 can pass on both sides a bar 15 forming part of the frame of cycle 10 to enable coupling thereto in the operating position shown in Fig. 1F by making use of for instance a cable lock, which in a manner to be described below can be coupled to the first wheel guide and inserted into the space bound by bars 15, 16, 17 and steering column 18 of cycle 10.

Fig. 2 shows a part of unit 6. The first wheel guide 7, at least the part thereof drawn here, has four continuous holes which for the sake of convenience are designated here with 19 and serve for passage of a cable lock or the like. The two strip-like parts of first wheel guide 7 are mutually coupled by means of two tubular connections. These parts can for instance consist of aluminium or stainless steel. Connecting tubes 20, 21 can for instance be manufactured from the same material and connected to the two strip-like parts by welding, glueing, screws, rivets or the like.

It is clearly shown that first wheel guide 7 is fixedly connected via central rise cam 11 to second wheel guide 8 which also comprises a metal strip which extends in a vertical plane and is provided with a part 22 bent roughly at a right angle for supporting the front wheel 9 of the cycle in the situation according to Fig. 1B, 1C, 1D, 1E and 1F. The rest position of unit 6 is defined by a stop situated in central rise cam 11. In this case a pin 23 is used for this purpose.

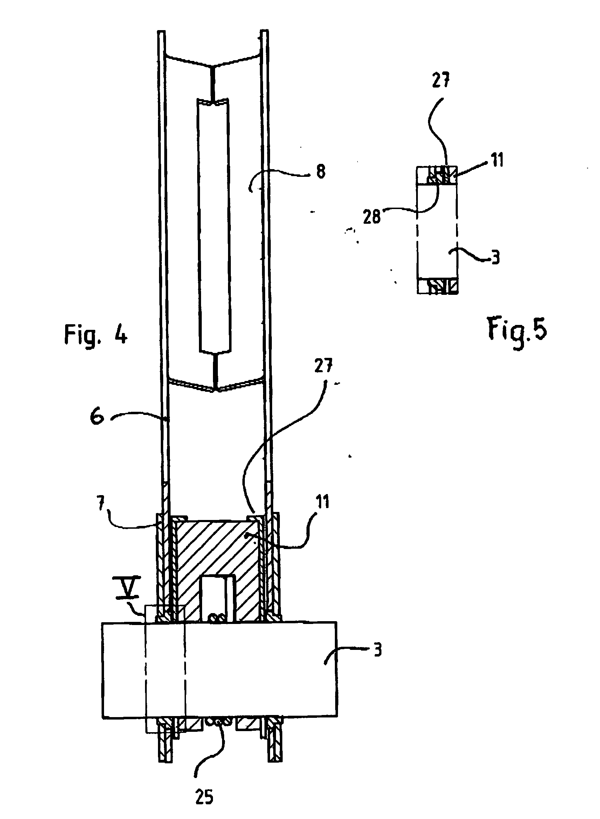

Rise cam 11 is rigidly connected to a sleeve 24 which can be rigidly coupled to tube 3. The manner of coupling will become apparent on the basis of Fig. 4 and 5.

Important for the operation of stand 1 is the position of the centre of gravity of unit 6. According to Fig. 1A the first wheel guide must after all extend horizontally in the rest position, thus be situated in its lowest position, in which the front wheel 9 of a cycle 10 can be moved into it. In the situation according to Fig. 1F, and also slightly earlier in the sequence according to Fig. 1, unit 6 is also situated in a stable position, for instance in that the own centre of gravity of unit 6 is situated on the left-hand side relative to tube 3, thus on the side of the second wheel guide, and/or due to the co-action with the weight of the cycle.

Fig. 3 shows a variant in which unit 6 is provided with a lock to be described hereinbelow. Such a lock is important in the use of cycles provided with wheels having a smaller wheel size than for instance the usual 26 inches, in co-action with a torsion spring 25. The lock can be embodied in diverse ways. Use can for instance be made of a snap closure (not drawn) for the purpose of locking the stop pin 23, which forms part of central rise cam 11, in the rest position to a part which is rigidly coupled to sleeve 24.

In the alternative embodiment shown in Fig. 3 use is made of a permanent magnet 26 which can lie against stop pin 23 such that a dominant part of the flux caused by the magnet flows through the ferromagnetic stop pin 23 acting as magnet armature.

In this embodiment the torsion spring 25 is built in to assist the tilting of unit 6 in the direction of the operating position after unlocking. Alternatively, the drawn torsion spring can also be embodied as a spiral-draw spring or other spring mechanism which exerts a torque on unit 6. When torsion spring 25 is used, it can be fixedly connected to support tube 3 and the other end can co-act with stop pin 23. As spring 25 uncoils, it co-displaces unit 6 in a tilting movement.

The central rise cam 11 serves to facilitate the placing of front wheel 9 of cycle 10 in the region of the centre of support tube 3. In addition, rise cam 11 serves as stop point and as carrier of lock 23, 26. Rise cam 11 is mounted non-movably on support tube 3 at a fixed position.

When front wheel 9 is placed onto central rise cam 11, wherein the centre of front wheel 9 reaches above the axis of support tube 3, the locking of unit 6 is uncoupled during this movement. This uncoupling has the result that unit 6 will want to take up the other extreme position as a result of the described shift in the centre of gravity of unit 6 and, at least in this embodiment, the influence of torsion spring 25.

As Fig. 6 shows particularly clearly, first wheel guide 7 will be situated on both sides of frame bar 15 of cycle 10 in the operating position according to Fig. 1F. The cycle is hereby supported both with its front wheel 9 and by first wheel guide 7, whereby no other provisions are necessary per se to hold the cycle in a stable position.

Moving the cycle 10 back from the position shown in Fig. 1F has the result that the first wheel guide is pushed back by front wheel 10 counter to the action of torsion spring 25 and/or the force of gravity of the system. Once the location of the centre of gravity of unit 6 has reached the other side of support tube 3, the construction then moves in the direction of the horizontal position of first wheel guide 7 as according to Fig. 1A, where locking once again takes place by means of a snap connection or the magnet means shown in Fig. 3.

Fig. 4 shows the manner in which unit 6 is supported by support tube 3.

This figure shows unit 6 in the position according to Fig. 1A, i.e. the rest position.

As the figure shows, a side seal 27 is added to the rise cam. This serves to protect against sand and dirt, but also to prevent the possibility of fingers being trapped at that position.

Fig. 5 shows detail V of Fig. 4 on an enlarged scale. A bearing 28 provides a low-friction and low-maintenance pivoting option for unit 6 relative to support tube 3.

Finally, Fig. 6 shows a cycle stand unit 29 which comprises five cycle stands which for the sake of convenience are all designated with reference numeral 1. Four of these are drawn in the rest position, while one is shown in the operating position.

In the operating position shown here the holes 19, or alternatively the connecting tubes 20, 21, can be used to arrange a chain lock between the cycle 10 for locking and stand 1.

Figs 5. 7A, 7B and 7C show respectively the rest position, an intermediate position and the operating position in views corresponding with Fig. 2. It will be apparent from these figures that unit 6, comprising first wheel guide 7 and second wheel guide 8, is pivotable relative to the fixedly disposed central rise cam 11.

In the embodiment of Fig. 6 the two side plates of first wheel guide 7 are only connected by means of one coupling tube 20 extending between the two in transverse direction and rigidly connected thereto.

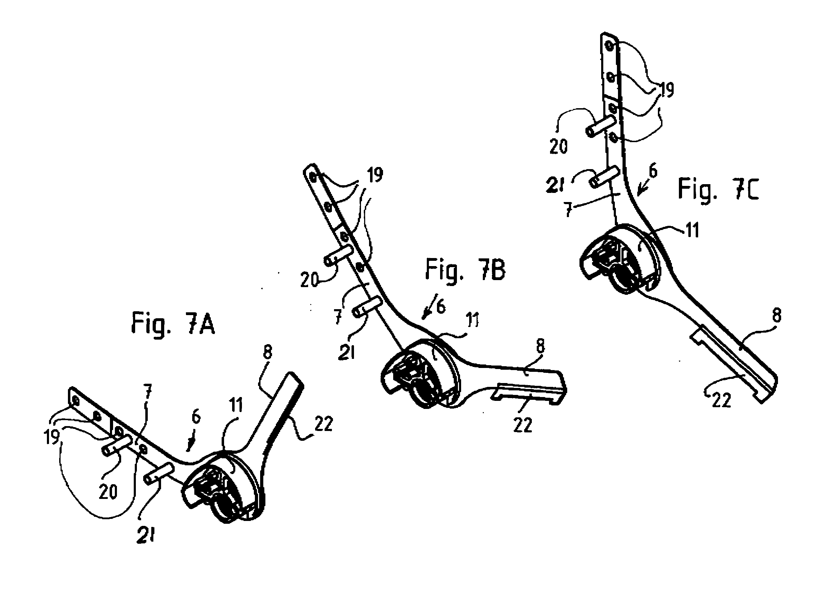

Finally, reference is made once again to Fig. 1F. In the situation shown in this Fig. 1F, a cycle is parked in cycle stand 1. Frame 15, 16, 17, 18 and front wheel 31 of the cycle are connected to first wheel guide 7 in the drawn manner by means of a commercially available cable lock 30 of random type. The manner in which the intended coupling is embodied will be apparent from the foregoing description, in particular with reference to Fig. 2, 6 and 7.

## Claims

1. Cycle stand (1), comprising:
a frame (2) for anchoring on a floor or in the ground;
a first wheel guide (7) with two elongate vertical side plates, an entry opening (14) and an exit opening, along which first wheel guide (7) can be rolled the front wheel (9) of a cycle (10) for placing in the cycle stand (1);
a second wheel guide (8) mounted pivotally relative to the frame (2) in a vertical plane and having a base and two elongate vertical side plates, and an entry opening connecting to the exit opening of the first wheel guide, wherein the second wheel guide inclines upward in the rest position and, due to the downward directed force resulting from the presence of said front wheel (9), pivots downward to an operating position around a pivot axis in the area of the transition between the exit opening of the first wheel guide (7) and the entry opening of the second wheel guide (8) ;
the first wheel guide (7) being provided on its free end zone with coupling means for coupling a part of a cycle (10) placed in the stand (1) to these coupling means in the operating position by means of a closable coupling device, for instance a chain lock;
the arrangement being such that, in the rest position of the cycle stand (1), the front wheel (9) of a cycle (10) for placing in the cycle stand (1) can reach the second wheel guide (8) in rolling manner via the first wheel guide (7), which second wheel guide (8) pivots downward to the operating position, at least after a continued displacement of said front wheel (9), whereby the first wheel guide (7) pivots upward;
the first wheel guide (7) and the second wheel guide (8) being rigidly connected to each other and forming a mutual angle between them, the angular point lying in the region of the pivot bearing;
a front wheel support is present for supporting the front wheel (9) of a cycle (10) placed in the cycle stand (1) ;
**characterized in that**
the second wheel guide (8) is also the front wheel support;
the first wheel guide (7) has a length such that in the operating position its free end zone can impart lateral support to a bar (15) of the frame of a parked cycle (10); and
the mutual angle formed between the first wheel guide (7) and the second wheel guide (8) is set in the range 105° - 150°.

2. Cycle stand (1) as claimed in claim 1, wherein said angle between the first wheel guide (7) and the second wheel guide (8) is adjustable.

3. Cycle stand (1) as claimed in claim 1, wherein the first wheel guide (7) and the second wheel guide (8) are embodied together as an integral, monolithic unit.

4. Cycle stand (1) as claimed in any of the foregoing claims, comprising reset means (25; 23, 26) for urging the first and the second wheel guides (7; 8) to the rest position.

5. Cycle stand (1) as claimed in claim 4, wherein the first and the second wheel guides (7; 8) are together inherently monostable and the reset means are based on the force of gravity.

6. Cycle stand (1) as claimed in claim 1, comprising spring means which urge the first and the second wheel guide to the operating position, wherein the spring force produced by these spring means is smaller than the force, for instance gravity, which holds the first and the second wheel guides (7; 8) in the rest position.

7. Cycle stand (1) as claimed in claim 1, comprising holding means (23, 26), for instance clamping means and/or magnet means, for the purpose of holding the first and the second wheel guides (7; 8) in the rest position with a low force such that under the influence of a front wheel (9) of a cycle (10) the second wheel guide (7) pivots downward while co-displacing the first wheel guide (8).

8. Cycle stand (1) as claimed in claim 7, wherein the magnet means comprise a magnet (26) with plastic-bonded neodymium.

9. Cycle stand (1) as claimed in claim 1, comprising a stop, which acts when reaching the rest position and/or the operating position, between the first and/or the second wheel guides (7; 8) on the one hand and the fixed world, for instance the frame (2), on the other.

10. Cycle stand (1) as claimed in claim 1, wherein the entry zone (14) of the first wheel guide (7) widens towards the outside.

11. Cycle stand (1) as claimed in claim 1, wherein the side plates of the first wheel guide are mutually coupled in longitudinal direction in their central zone by a transverse connection (20, 21).

12. Cycle stand (1) as claimed in claim 1, comprising a casing (11) which is arranged over a certain angle around and at a distance from the pivot bearing in the transition zone between the first wheel guide (7) and the second wheel guide (8) and which extends substantially between the two side plates on the one lateral side and the two side plates on the other lateral side, over which casing (11) the front wheel (7) of a cycle (10) for placing in the cycle stand (1) must travel to reach the second wheel guide (8) from the first wheel guide (7).

13. Cycle stand (1) as claimed in any of the foregoing claims, wherein at least the first and the second wheel guides (7; 8) consist of stainless steel, aluminium, for instance cast or injection-moulded aluminium, plastic such as PE, POM, ABS, optionally provided with a reinforcement.

14. cycle stand (1) as claimed in claim 1, wherein the free end zone of the first wheel guide (7) consists only of the two side plates, which can impart lateral support to a bar (15) of the frame (15, 16, 17) of a parked cycle (10) on both respective sides.

15. Cycle stand (1) as claimed in claim 1, wherein the or each inner surface of the free end zone of the first wheel guide (7) is covered with a material, for instance rubber or a rubber-like material, which prevents scratching or deforming contact between this end zone and a bar (15) of the frame of a parked cycle (10).

16. Cycle stand (1) as claimed in claim 1, wherein the first wheel guide is provided with a least one continuous hole (19) for passage of the chain or cable of a chain lock (30) or cable lock, respectively, or the like for coupling to the frame (15, 16, 17) and/or the front wheel (9) of a parked cycle (10).

## Patentansprüche

1. Fahrradständer (1), der aufweist:
einen Rahmen (2) zum Verankern auf einem Fußboden oder in der Erde;
eine erste Radführung (7) mit zwei länglichen vertikalen Seitenplatten, einer Eingangsöffnung (14) und einer Ausgangsöffnung, entlang welcher erster Radführung (7) das Vorderrad (9) des Fahrrads (10) zum Anordnen in dem Fahrradständer (1) gerollt werden kann;
eine zweite Radführung (8), die in einer vertikalen Ebene relativ zum Rahmen (2) schwenkbar angebracht ist und eine Basis und zwei längliche vertikale Seitenplatten und eine Eingangsöffnung aufweist, die mit der Ausgangsöffnung der ersten Radführung verbunden ist, wobei die zweite Radführung sich nach oben in der Ruhestellung neigt und aufgrund der nach unten gerichteten Kraft, die von der Anwesenheit des Vorderrades (9) herrührt, nach unten in eine Betriebsstellung um eine Schwenkachse im Gebiet des Übergangs zwischen der Ausgangsöffnung der ersten Radführung (7) und der Eingangsöffnung der ersten Radführung (8) verschwenkt;
wobei die erste Radführung (7) an ihrem freien Endbereich mit Verbindungsmitteln zum Verbinden eines Teils eines Fahrrades (10), das in dem Ständer (1) angeordnet ist, mit diesen Verbindungsmitteln in der Betriebsstellung mit Hilfe einer schließbaren Verbindungseinrichtung versehen ist, z. B. einem Kettenschloss;
wobei die Anordnung so ist, dass in der Ruhestellung des Fahrradständers (1) das Vorderrad (9) des Fahrrades (10) zum Anordnen im Fahrradständer (1) die zweite Radführung (8) in rollender Weise über die erste Radführung (7) erreichen kann, welche zweite Radführung (8) sich nach unten in die Betriebsstellung schwenkt, wenigstens nach einer fortgesetzten Verschiebung des Vorderrades (9), wodurch die erste Radführung (7) nach oben schwenkt;
wobei die erste Radführung (7) und die zweite Radführung (8) starr miteinander verbunden sind und einen Winkel zwischen sich bilden, dessen Winkelpunkt im Bereich der Schwenklagerung liegt;
wobei eine Vorderradstütze (1) zum Tragen des Vorderrades (9) eines Fahrrads (10) vorhanden ist, das im Fahrradständer (1) angeordnet ist;
**dadurch gekennzeichnet, dass**
die zweite Radführung (8) ebenfalls die Vorderradstütze ist;
die erste Radführung (7) eine solche Länge hat, dass in der Betriebsstellung ihr freier Endbereich seitliche Unterstützung für eine Stange (15) des Rahmens eines geparkten Fahrrades (10) ausüben kann; und
der Winkel, der zwischen der ersten Radführung (7) und der zweiten Radführung (8) in den Bereich von 105° bis 150° eingestellt ist.

2. Fahrradständer (1) nach Anspruch 1, bei dem der Winkel zwischen der ersten Radführung (7) und der zweiten Radführung (8) einstellbar ist.

3. Fahrradständer (1) nach Anspruch 1, bei dem die erste Radführung (7) und die zweite Radführung (8) zusammen als eine integrale monolithische Einheit ausgebildet sind.

4. Fahrradständer (1) nach einem der vorangehenden Ansprüche, der Rückstellmittel (25; 23, 26) zum Drängen der ersten und zweiten Radführungen (7; 8) in die Ruhestellung aufweist.

5. Fahrradständer (1) nach Anspruch 4, bei dem die ersten und zweiten Radführungen (7; 8) zusammen inhärent monostabil ausgebildet sind und die Rückstellmittel auf der Schwerkraft beruhen.

6. Fahrradständer (1) nach Anspruch 1, der Federmittel aufweist, die die erste und zweite Radführung in die Betriebsstellung drängen, wobei die Federkraft, die durch diese Federmittel erzeugt wird, kleiner ist als die Kraft, z. B. Schwerkraft, die die ersten und zweiten Radführungen (7; 8) in der Ruhestellung hält.

7. Fahrradständer (1) nach Anspruch 1, der Haltemittel (23, 26), z. B. Klemmmittel und/oder Magnetmittel für den Zweck aufweist, die ersten und zweiten Radführungen (7; 8) in der Ruhestellung mit einer kleinen Kraft zu halten, so dass unter dem Einfluss eines Vorderrades (9) eines Fahrrades (10) die zweite Radführung (7) nach unten schwenkt, während sie gleichzeitig die erste Radführung (8) mitverstellt.

8. Fahrradständer (1) nach Anspruch 7, bei dem die Magnetmittel einen Magneten (26) mit kunststoffgebundenem Neodym aufweisen.

9. Fahrradständer (1) nach Anspruch 1, der einen Anschlag, der beim Erreichen der Ruheposition und/oder der Betriebsposition wirkt, zwischen den ersten und/oder den zweiten Radführungen (7; 8) einerseits und andererseits der festen Welt, z. B. dem Rahmen (2) aufweist.

10. Fahrradständer (1) nach Anspruch 1, bei dem der Eingangsbereich (14) der ersten Radführung (7) sich nach außen erweitert.

11. Fahrradständer (1) nach Anspruch 1, bei dem die Seitenplatten der ersten Radführung miteinander in Längsrichtung in ihrem mittigen Bereich durch eine Querverbindung (20, 21) verbunden sind.

12. Fahrradständer (1) nach Anspruch 1, der ein Gehäuse (11) aufweist, das über einen gewissen Winkel um und in einem Abstand von dem Schwenklager im Übergangsbereich zwischen der ersten Radführung (7) und der zweiten Radführung (8) angeordnet ist, und das sich im Wesentlichen zwischen den beiden Seitenplatten an der einen seitlichen Seite und den beiden Seitenplatten an der anderen seitlichen Seite erstreckt, über welches Gehäuse (1) sich das Vorderrad (9) eines Fahrrades (10) zum Anordnen im Fahrradständer (1) bewegen muss, um die zweite Radführung (8) von der ersten Radführung (7) her zu erreichen.

13. Fahrradständer (1) nach einem der vorangehenden Ansprüche, wobei wenigstens die ersten und zweiten Radführungen (7; 8) aus nichtrostendem Stahl, Aluminium, z. B. Guss- oder Spritzgussaluminium, Kunststoff wie PE, POM, ABS, optional mit einer Verstärkung versehen, bestehen.

14. Fahrradständer (1) nach Anspruch 1, bei dem der freie Endbereich der ersten Radführung (7) nur aus den beiden Seitenplatten besteht, die seitliche Unterstützung für eine Stange (15) des Rahmens (15, 16, 17) eines geparkten Fahrrades (10) an beiden Seiten ausüben kann.

15. Fahrradständer (1) nach Anspruch 1, bei dem die oder jede innere Oberfläche des freien Endbereichs der ersten Radführung (7) mit einem Material, z. B. Gummi oder gummiähnliches Material bedeckt ist, das eine kratzende oder verformende Berührung zwischen diesem Endbereich und einer Stange (15) des Rahmens des geparkten Fahrzeugs (10) verhindert.

16. Fahrradständer (1) nach Anspruch 1, bei dem die erste Radführung mit wenigstens einem Durchgangsloch (19) zum Durchstecken einer Kette oder eines Kabels eines Kettenschlosses (30) oder eines Kabelschlosses oder dergleichen zum Verbinden mit dem Rahmen (15, 16, 17) und/oder dem Vorderrad (9) eines geparkten Fahrrades (10) versehen ist.

## Revendications

1. Support pour bicyclettes (1) comprenant :
un cadre (2) pour l'ancrage sur un plancher ou dans le sol ;
un premier guide de roue (7) comprenant deux plaques latérales allongées, une ouverture d'entrée (14) et une ouverture de sortie, premier guide de roue (7) le long duquel la roue avant (9) d'une bicyclette (10) peut être roulée pour le positionnement dans le support pour bicyclettes (1) ;
un second guide de roue (8) monté de manière pivotante par rapport au cadre (2) dans un plan vertical et présentant une base et deux plaques latérales verticales allongées, et une ouverture d'entrée reliée à l'ouverture de sortie du premier guide de roue, dans lequel le second guide de roue s'incline vers le haut dans la position de repos et, en raison de la force dirigée vers le bas résultant de la présence de ladite roue avant (9), pivote vers le bas vers une position de fonctionnement autour d'un axe de pivotement dans la zone de transition entre l'ouverture de sortie du premier guide de roue (7) et l'ouverture d'entrée du second guide de roue (8) ;
le premier guide de roue (7) étant muni sur sa zone d'extrémité libre de moyens de couplage pour coupler une partie d'une bicyclette (10) placée dans le support (1) à ces moyens de couplage dans la position de fonctionnement, au moyen d'un dispositif de couplage pouvant être fermé, par exemple une fermeture à chaîne ;
l'agencement étant tel que, dans la position de repos du support pour bicyclettes (1), la roue avant (9) d'une bicyclette (10) destinée à être positionnée dans le support pour bicyclettes (1) peut atteindre le second guide de roue (8) par roulement via le premier guide de roue (7), ce second guide de roue (8) pivote vers le bas dans la position de fonctionnement, au moins après un déplacement continu de ladite roue avant (9), moyennant quoi le premier guide de roue (7) pivote vers le haut ;
le premier guide de roue (7) et le second guide de roue (8) étant reliés de manière rigide l'un à l'autre et formant entre eux un angle mutuel, le point angulaire se trouvant dans la région du palier de pivotement ;
un support de roue avant est présent pour supporter la roue avant (9) d'une bicyclette (10) placée dans le support pour bicyclettes (1) ;
**caractérisé en ce que**
le second guide de roue (8) est également le support de roue avant ;
le premier guide de roue (7) a une longueur telle que, dans la position de fonctionnement, sa zone d'extrémité libre peut fournir un support latéral à une barre (15) du cadre d'une bicyclette garée (10) ;
et l'angle mutuel entre le premier guide de roue (7) et le second guide de roue (8) est réglé dans l'intervalle de 105° à 150°.

2. Support pour bicyclettes (1) selon la revendication 1, dans lequel ledit angle entre le premier guide de roue (7) et le second guide de roue (8) est réglable.

3. Support pour bicyclettes (1) selon la revendication 1, dans lequel le premier guide de roue (7) et le second guide de roue (8) sont réalisés ensemble en tant qu'unité monolithique intégrée.

4. Support pour bicyclettes (1) selon l'une quelconque des revendications précédentes, comprenant des moyens de repositionnement (25 ; 23, 26) pour solliciter les premier et second guides de roue (7 ; 8) dans la position de repos.

5. Support pour bicyclettes (1) selon la revendication 4, dans lequel les premier et second guides de roue (7 ; 8) sont ensemble fondamentalement monostables et les moyens de repositionnement sont basés sur la force de gravité.

6. Support pour bicyclettes (1) selon la revendication 1, comprenant des moyens de ressort qui sollicitent les premier et second guides de roue dans la position de fonctionnement, dans lequel la force de ressort produite par ces moyens de ressort est inférieure à la force, par exemple la gravité, qui retient les premier et second guides de roue (7 ; 8) dans la position de repos.

7. Support pour bicyclettes (1) selon la revendication 1, comprenant des moyens de retenue (23, 26), par exemple des moyens de serrage et/ou des moyens aimantés, dans le but de retenir les premier et second guides de roue (7 ; 8) dans la position de repos avec une force faible, de sorte que sous l'influence d'une roue avant (9) d'une bicyclette (10) le second guide de roue (7) pivote vers le bas tout en déplaçant conjointement le premier guide de roue (8).

8. Support pour bicyclettes (1) selon la revendication 7, dans lequel les moyens aimantés comprennent un aimant (26) avec un néodyme lié par une substance plastique.

9. Support pour bicyclettes (1) selon la revendication 1, comprenant une butée, qui agit lorsque la position de repos et/ou la position de fonctionnement est atteinte, entre le premier et/ou le second guide de roue (7 ; 8) d'une part et la structure fixe, par exemple le cadre (2), d'autre part.

10. Support pour bicyclettes (1) selon la revendication 1, dans lequel la zone d'entrée (14) du premier guide de roue (7) s'élargit vers l'extérieur.

11. Support pour bicyclettes (1) selon la revendication 1, dans lequel les plaques latérales du premier guide de roue sont mutuellement couplées dans la direction longitudinale dans leur zone centrale par un raccordement transversal (20, 21).

12. Support pour bicyclettes (1) selon la revendication 1, comprenant un boîtier (11) qui est agencé sur un certain angle autour et à une distance du palier de pivotement dans la zone de transition entre le premier guide de roue (7) et le second guide de roue (8), et qui s'étend sensiblement entre les deux plaques latérales sur le premier côté latéral et les deux plaques latérales sur l'autre côté latéral, boîtier (11) sur lequel la roue avant (7) d'une bicyclette (10) destinée à être positionnée dans le support pour bicyclettes (1) doit se déplacer pour atteindre le second guide de roue (8) depuis le premier guide de roue (7).

13. Support pour bicyclettes (1) selon l'une quelconque des revendications précédentes, dans lequel au moins les premier et second guides de roue (7 ; 8) sont constitués d'acier inoxydable, d'aluminium, par exemple de l'aluminium coulé ou moulé par injection, du plastique tel que PE, POM, ABS, munis de manière optionnelle d'un renforcement.

14. Support pour bicyclettes (1) selon la revendication 1, dans lequel la zone d'extrémité libre du premier guide de roue (7) est constituée uniquement de deux plaques latérales, qui peuvent fournir un support latéral à une barre (15) du cadre (15, 16, 17) d'une bicyclette garée (10) des deux côtés respectifs.

15. Support pour bicyclettes (1) selon la revendication 1, dans lequel la ou chaque surface interne de la zone d'extrémité libre du premier guide de roue (7) est recouverte d'un matériau, par exemple de caoutchouc ou de matériau similaire à du caoutchouc, qui empêche un contact d'abrasion ou de déformation entre cette zone d'extrémité et une barre (15) du cadre d'une bicyclette garée (10).

16. Support pour bicyclettes (1) selon la revendication 1, dans lequel le premier guide de roue est muni d'au moins un trou continu (19) pour le passage de la chaîne ou du câble d'une fermeture à chaîne (30) ou de la fermeture à câble, respectivement, ou similaire, pour le couplage au cadre (15, 16, 17) et/ou à la roue avant (9) d'une bicyclette garée (10).
